# EUROPEAN PATENT SPECIFICATION

(11) **EP 0 990 011 B1**
(45) Date of publication and mention of the grant of the patent: **19.05.2004**
(21) Application number: 99917866.8
(22) Date of filing: 18.03.1999
(51) Int. Cl.: C08L 7/02, C08J 5/18, C05F 17/02

(54) **FILM FOR ACCELERATED COMPOST FERMENTATION**
FILM ZUR FÖRDEREN DER FERMENTIERUNG VON KOMPOST
FILM D'ACCELERATION DE FERMENTATION DE COMPOST

(30) Priority: 26.03.1998 JP 7874398
(43) Date of publication of application: 05.04.2000
(73) Proprietor: Atofina, 92800 Puteaux (FR)
(72) Inventor: ISHINO, Kiyotaka Elf Atochem Japan, Shimogyo-ku Kyoto-shi Kyoto 600 (JP); KURATSUJI, Takatoshi Elf Atochem Japan, Shimogyo-ku Kyoto-shi Kyoto 600 (JP); YAMAMOTO, Jun Elf Atochem Japan, Shimogyo-ku Kyoto-shi Kyoto 600 (JP); IKETAKI, Takashi, Obihiro-shi Hokkaido (JP)
(74) Representative: Neel, Henry
(86) International application number: PCT/EP1999/002053
(87) International publication number: WO 1999/048969

(56) References cited:
- EP-A- 0 378 015
- DE-A- 4 440 837
- US-A- 3 895 916
- US-A- 5 660 887
- KAPLAN W A ET AL: "THE EFFECT OF POLYMER STRUCTURE ON THE GAS PERMEABILITY OF MODEL POLYURETHANES" JOURNAL OF CELLULAR PLASTICS, vol. 30, no. 3, 1 May 1994 (1994-05-01), pages 242-272, XP000443643 ISSN: 0021-955X

## Description

### [Detailed Description of the Invention]

### [Industrial Field of Application]

The present invention relates to a process to make accelerated compost fermentation. The objective thereof lies in shortening the fermentation period and preventing underground water pollution.

### [Prior-Art]

Compost is obtained by aerobic microbial fermentation after mixing straw, rice chaff, weeds or the like with the excreta of domestic animals. Consequently, for obtaining a good quality compost it is necessary to have sufficient oxygen and a suitable level of temperature and moisture and, hitherto, the following methods have been adopted primarily.
First of all, in regard to the traditional method based on forming a heap, there has been the problem that, when the weather is fine, the surface dries out and hardens, so that air (oxygen) cannot readily pass into the interior and the fermentation is slowed, while, when it is raining, the moisture soaks into the interior, so that the composting materials are cooled and the fermentation is incomplete. Moreover, contaminated water soaks underground, which brings about the problem of under-ground water pollution.

To overcome such difficulties, covering with polyvinyl chloride or polyethylene sheet has been tried to some extent but, with such sheet, not only is there a build-up of water vapour and carbon dioxide in the interior when the weather is fine but also the supply of oxygen is inadequate, so that aerobic fermentation by the micro-organisms is impeded and therefore the sheet has to be removed. However, at night, to cope with when it rains, it is necessary to cover over with the sheet again, so there is the problem of the nuisance of having to place and then remove the sheet.

On the other hand, methods have been proposed using special apparatus and equipment, so that air is circulated and the temperature controlled, and these methods are to some extent being employed in practice (see, for example, Japanese Unexamined Patent Publication Nos 55-51788, 57-123883, 60-260490, 3-237081, 3-261690, 4-59685, 5-170585, 7-277866, 7-98711 and 2524040).
At the same time, methods for accelerating fermentation using microbial decomposition accelerators have also been tried, as described in Japanese Unexamined Patent Publication No. 9-110571.
However, not only do these methods generally require equipment investment by the farmer, but also the procedure is complex and the equipment maintenance requires time, so a more simple, improved, method has been demanded.

### [Problem to be Resolved by the Invention]

The present inventors have carried out a painstaking investigation aimed at providing protection from rain-water by a simple method and shortening the fermentation time, as a result of which they have discovered that by using a film which is water impermeable but through which water vapour and gases can pass, this objective is realised. The present invention is based on this discovery.

### [Means for Resolving the Problem]

The present invention is a process to make accelerated compost fermentation in which a heap of compost is covered with a film:
- which is water impermeable but permeable to water vapour, oxygen and carbon dioxide
- said film comprises a block copolymer in which polyoxyalkylene chains and other polymer chains are linked together or a polymer in which polyalkylene chains are linked together via connected regions and is a polyether polyamide, block copolymer a polyetherester block copolymer or a polyetherurethane or a mixture thereof and the water vapour permeability thereof is at least 300 g/m2.24h, the oxygen permeability is at least 1,000 cm3/m2.24h.atm and the carbon dioxide permeability is at least 10,000 cm3/m2.24h.atm; together with a process for accelerated compost fermentation which is characterized in that the aforesaid film is reinforced by means of a nonwoven material or net.

In the present invention, "polymer containing polyether chains as structural units" refers to a block copolymer in which polyoxyalkylene chains and other polymer chains are linked together, or polymer in which polyoxyalkylene chains are linked together via connecting regions. As examples of the polyoxyalkylene here, there are poly-oxyethylene, poly(1,2- and 1,3-oxypropylene), polyoxytetramethylene, polyoxyhexamethylene, block or random copolymers of ethylene oxide and propylene oxide, and block or random copolymers of ethylene oxide and tetra-hydrofuran. In particular, it is preferred that the number of carbons in the alkylene moiety be from 2 to 4, with polyoxyethylene being most preferred. The number average molecular weight of the polyoxyalkylene is from 200 to 6000, and preferably from 300 to 4000.

In the present invention, as examples of desirably used "polymer containing polyether chains as structural units" there are polyetherpolyamide block copolymers, polyether-polyester block copolymers and polyetherurethanes. Of these, the polyetherpolyamide block copolymers are particularly preferred.

The "polyetherpolyamide block copolymers" used in the present invention are polymers in which there are linked together polyoxyalkylene chains (a) and polyamide chains (b) which are the polymers of aminocarboxylic acids or lactams with 6 or more carbon atoms, or of the salts of dicarboxylic acids and diamines with 6 or more carbon atoms. Where (a) and (b) are mutually connected via a dicarboxylic acid (c) having from 4 to 20 carbons, the polymer is generally referred to as a polyetherester-amide, and such polymer is also included. Here, as the "aminocarboxylic acids or lactams with 6 or more carbon atoms, or salts of dicarboxylic acids and diamines with 6 or more carbon atoms", 11-aminoundecanoic acid, 12-aminododecanoic acid, caprolactam, laurolactam, the salt of hexamethylenediamine + adipic acid and the salt of hexamethylenediamine + sebacic acid are preferably used. Again, there may be jointly used two or more types of aforesaid components (a) and (b).

Such polymer may be produced, for example, by the method described in Japanese Examined Patent Publication No. 56-45419. The type and weight ratio of the polyether component and the polyamide component in the block copolymer used in the present invention are selected according to the objectives and the application. From the point of view of water vapour permeability, gas permeability, water resistance and handling properties, etc, the ratio of the polyether/polyamide is preferably from 4/1 to 1/4.

The "polyetherpolyester block copolymer" used in the present invention is one in which there are linked together polyoxyalkylene chains (a) and polyester chains (d) comprising polymer of a hydroxycarboxylic acid with at least six carbons or of a dihydroxy compound with at least two carbons and an aromatic dicarboxylic acid. Again, in regard to these (a) and (d) components, two or more types may be jointly employed. Such polymer is produced for example by the method described in US Patent 4,739,012. The weight ratio of the aforesaid (a) and (d) components in the block copolymer employed in the present invention is determined by the objectives and the application.

The 'polyetherurethane' employed in the present invention is a thermoplastic polyurethane employing polyether as the soft segments, but there is little effect with a polyester type or caprolactone type even though they are also polyurethanes. Specifically, the polyurethanes are normally obtained by the reaction of an organic diisocyanate and a polyether of molecular weight from 500 to 6000 with, in some cases, the chain extension being carried out in the presence of catalyst. As the isocyanate, there is preferably employed tolylene diisocyanate, diphenylmethane diisocyanate or the like, and as the polyether there is preferably used polytetramethylene glycol or polypropylene oxide, etc.

In the present invention, "composition in which the chief component is polymer containing polyether chains as structural units" means a polyetherpolyamide block copolymer, polyetherpolyester block copolymer or polyetherurethane on its own, a mixture of these. It also includes blends with some other resin. As examples of the resins which can be blended to produce the composition, there are polyolefins such as polyethylene and the copolymers of polyethylene and acrylate. In the case where blending is carried out with another resin, there may also be incorporated a compatibilizing agent such as an ethylene copolymer or graft copolymer with unsaturated epoxy groups or acid anhydride groups, or an acrylate copolymer.
The type and ratio of the resin other than the polymer with polyether structural units will be selected such that the water vapour and gas permeabilities lie within the following ranges.

The film of the present invention needs to have a water vapour permeability of at least 300 g/m2.24h, an oxygen permeability of at least 1,000 cm3/m2.24h.atm and a carbon dioxide permeability of at least 10,000 cm3/m2.24h.atm. Preferably, the water vapour permeability is at least 1000 g/m2.24h, the oxygen permeability is at least 3,000 cm3/m2.24h.atm and the carbon dioxide permeability is at least 30,000 cm3/m2.24h.atm, and more preferably the water vapour permeability is at least 2000 g/m2.24h, the oxygen permeability is at least 5,000 cm3/m2.24h.atm and the carbon dioxide permeability is at least 50,000 cm3/m2.24h.atm.

If the water vapour permeability is less than 300 g/m2.24h, then the interior moisture will increase. If the carbon dioxide permeability is less than 10,000 cm3/m2.24h.atm, there is a build-up of carbon dioxide gas in the interior and if the oxygen permeability is less than 1,000 cm3/m2.24h.atm, then there is an insufficient supply of oxygen to the interior, so that anaerobic fermentation occurs and a good quality compost is not obtained.

In the composition in which the chief component is polymer containing polyether chains as structural units, there may be freely included known antioxidants, thermal decomposition preventives, ultraviolet absorbers, hydrolysis resistance improvers, colouring agents (dyes and pigments), antistatic agents, electro-conductors, crystallization nucleating agents, crystallization promoters, plasticizers, ready slip agents, lubricating agents, release agents, flame retardants and flame retarding auxiliaries, within a range such that the characteristics of the present invention are not impaired. In regard to the method for producing film from this composition, there can be used the T-die extrusion method or the inflation method, with film formation being conducted by passage through a T-die or an inflation die, etc. The extrusion temperature will depend on the resin type and the blending ratio but, in general, it is from 120 to 250°C.

The film of the present invention is mostly used outdoors, so in cases where strength is required it is still more effective to carry out reinforcement with a nonwoven material or net. As the nonwoven material, there can be used one which comprises polyamide or polyester fibre. A polyolefin net or the like can also be used.
in the case of a nonwoven material or net, a two layer structure (with the nonwoven material or net on the outside) or a three layer structure (with the film interposed between nonwoven material or net) may be used. However, it is necessary to select a material, form and thickness such that the water vapour and gas permeability are not impaired.

### [Examples]

Below, the present invention is explained by means of examples but it goes without saying that the present invention is not to be restricted just to these. Now, in the examples, the various properties were measured by the following methods.
(1) Water vapour permeability (units: g/m2.24h)
   The film was subjected to measurement under conditions B (40°C, 90% relative humidity) based on JIS Z0208.
(2) Gas permeability (units: cc/m2.24h.atm or %)
   Measurement was carried out by the pressure difference method. The specific conditions were as follows.
   Equipment: gas permeability measurement device model GTR-10XE produced by the Yanako Bunseki Kogyo (Co.).
   Measurement area: 15.2 cm2 (44 mm diameter)
   Detection method: calibration curve method based on a gas chromatograph fitted with a TCD
   Temperature, relative humidity: 25°C, 0% RH
   Carrier gas: helium, 70 KPa
   Diffusion gas: CO2/O2/N2/C2H4 (30.0/30.0/39.12/0.88 vol%)

Further, the films employed in the present invention were as follows.
A-1: Film of thickness 25 microns comprising polyetherester-polyamide block copolymer consisting of polyoxyethylene chains and polyamide 12 chains (weight ratio 1/3)
The permeabilities of this film were as follows.
water vapour permeability: 5,100 g/m2.24h
oxygen permeability: 3,700 cm3/m2.24h.atm
carbon dioxide permeability: 55,000 cm3/m2.24h.atm
A-2: Film of thickness 25 microns comprising a composition consisting of polyetherester-polyamide block copolymer composed of polyoxyethylene chains and polyamide 12 chains (weight ratio 1/1), and ethylene-butyl acrylate copolymer, (weight ratio of composition = 65/35)
The permeabilities of this film were as follows.
water vapour permeability: 4,000 g/m2.24h
oxygen permeability: 109,000 cm3/m2.24h.atm
carbon dioxide permeability: 27,000 cm3/m2.24h.atm
A-2: Film A-2 laminated and reinforced with a polyamide 6 nonwoven
B-2: Commercial plasticized vinyl chloride film for agriculture
water vapour permeability: 40 g/m2.24h oxygen permeability: 1,800 cm3/m2.24h.atm carbon dioxide permeability: 12,000 cm3/m2.24h.atm

### [Example 1, Comparative Example 1]

Composts were prepared in five sections, in each of which had been compressed compost material comprising straw mixed with cow dung to a size of height about 2 m, width about 3 m and length about 20 m, and covered respectively with A-1, A-2, A-3, B-1 and B-0 [compost heap with no film]. Now, excepting that turning of the heap was carried out every month, they were left covered with the film. On each such occasion, the compost weight and the compost composition (moisture, organic material and chief inorganic materials content) were measured. Further, the temperature of the compost was monitored with a temperature sensor.
In the case of the A-1, A-2 and A-3 composts, at the time of the third monthly turning of the heap, the straw had decomposed for the most part and it was concluded that the fermentation had proceeded fully. Now, when exposed to a strong wind, A-2 was seen to have suffered some damage, but no damage was noted for A-3 which was reinforced with a nonwoven material.
Table 1 shows the change in compost weight, moisture content and temperature for A-1, B-0 and B-1.

**[Table 1]**

| Change in Compost Weight, Moisture and Temperature | | | |
|---|---|---|---|
| | A-1 | B-0 | B-1 |
| Total Weight (1) | | | |
| after 0 month | 100 | 100 | 100 |
| after 1 month | 81 | 87 | 89 |
| after 2 months | 74 | 85 | 84 |
| after 3 months | 62 | 84 | 76 |
| | | | |

| Moisture % | | | |
|---|---|---|---|
| after 0 month | 66 | 62 | 70 |
| after 1 month | 60 | 67 | 66 |
| after 2 months | 65 | 63 | 65 |
| after 3 months | 64 | 65 | 67 |
| | | | |

| Temperature °C | | | |
|---|---|---|---|
| 0-1 months | 40-60 | 45-65 | 30-55 |
| 1-2 month | 35-58 | 25-55 | 30-45 |
| 2-3 months | 20-40 | 3-35 | 20-30 |

| | | | |
|---|---|---|---|
| 1) The weight at 0 month being taken as 100% | | | |

From Table 1, the weight reduction was most rapid in section A-1 compared to the others. This was because the water vapour permeability was high but there was no penetration of rain water. Furthermore, the moisture content was largely kept constant at a suitable level, and the temperature too moved within a reasonable range of 40-60°. For these reasons, it is concluded that microbial fermentation occurred rapidly. Moreover, in terms of the weight reduction, since after 3 months this had already reached the same level as ordinary completely composted material, it was concluded that the fermentation was complete. On the other hand in the case of section B-1, since the moisture vapour permeability was low, moisture evaporation was suppressed and the reduction in weight was slow. Moreover, since the temperature was low, it is thought that there was little heat evolution due to aerobic fermentation by the micro-organisms. Table 2 shows the compositions of the composts after 3 months for A-1, B-0 and B-1.

**[Table 2]**

| Compost Composition | | | | |
|---|---|---|---|---|
| | A-1 | B-0 | B-1 | Good Compost |
| total carbon (%) | 24.5 | 23.3 | 26.5 | 30-40 |
| total nitrogen (%) | 2.2 | 1.8 | 1.9 | ≥2.2 |
| CaO (%) | 2.9 | 2.5 | 2.7 | ≥2.4 |
| K₂O (%) | 4.2 | 4.1 | 4.5 | ≥4.0 |
| electrical conductivity ms/cm.s | 8.2 | 6.7 | 7.1 | ≥7.8 |

From Table 2, it can be seen that although the total carbon in section A-1 was slightly low, the total nitrogen exceeded 2% and the CaO and K₂O were at least the specified values, while electrical conductivity which indicates activity was 8 ms/cm.s, and so a good compost was obtained. On the other hand, in the case of B-0 and B-1, the total nitrogen and the electrical conductivity were low and a good compost was not obtained after 3 months.

### [Effects of the Invention]

As explained above, by employing film through which water does not pass but through which water vapour and gas can permeate, the present invention offers simple protection against rainwater and shortens the fermentation period.

## Claims

1. A process to make accelerated compost fermentation in which a heap of compost is covered with a film :
- which is water impermeable but permeable to water vapour, oxygen and carbon dioxide,
- said film comprises a block copolymer in which polyoxyalkyene chains and other polymer chains are linked together or a polymer in which polyoxyalkylene chains are linked together via connecting regions and is a polyetherpolyamide block copolymer, a polyetherpolyester block copolymer or a polyetherurethane or mixture thereof
- the water vapour permeability of said film is at least 300 g/m².24 h, the oxygen permeability is at least 1,000 cm³/m².24h.atm and the carbon dioxide permeability is at least 10,000 cm³/m².24h.atm.

2. A process according to claim 1 in which the film is reinforced by means of a nonwoven material or net.

## Patentansprüche

1. Verfahren zum Bewirken einer beschleunigten Kompostfermentation, wobei ein Haufen Kompost mit einer Folie abgedeckt ist,
- die wasserundurchlässig, aber Wasserdampf, Sauerstoff und Kohlendioxid gegenüber durchlässig ist,
- die Folie ein Blockcopolymer, bei dem Polyoxyalkylenketten und andere Polymerketten miteinander verbunden sind, oder ein Polymer, bei dem Polyoxyalkylenketten über Verbindungsbereiche miteinander verbunden sind, umfaßt und ein Polyetherpolyamid-Blockcopolymer, ein Polyetherpolyester-Blockcopolymer oder ein Polyetherurethan oder ein Gemisch davon ist,
- die Wasserdampfdurchlässigkeit der Folie zumindest 300 g/m²·24 h, die Sauerstoffdurchlässigkeit zumindest 1.000 cm³/m²·24 h atm und die Kohlendioxiddurchlässigkeit zumindest 10.000 cm³/m² 24 hatm beträgt.

2. Verfahren nach Anspruch 1, wobei die Folie durch ein Vliesstoffmaterial oder ein Netz verstärkt ist.

## Revendications

1. Procédé de réalisation de la fermentation accélérée de compost, dans lequel un tas de compost est recouvert d'un film :
- qui est imperméable à l'eau mais perméable à la vapeur d'eau, à l'oxygène et au dioxyde de carbone,
- ledit film comprend un copolymère bloc dans lequel des chaînes de polyoxyalkylène et d'autres chaînes polymères sont liées les unes aux autres, ou un polymère dans lequel des chaînes de polyoxyalkylène sont liées les unes aux autres par l'intermédiaire de zones de liaison et qui est un copolymère bloc polyéther-polyamide, un copolymère bloc polyéther-polyester ou un polyéther-uréthane ou un mélange de ceux-ci,
- la perméabilité à la vapeur d'eau dudit film est d'au moins 300 g/m².24 h, la perméabilité à l'oxygène est d'au moins 1 000 cm³/m².24 h.atm et la perméabilité au dioxyde de carbone est d'au moins 10 000 cm³/m².24 h.atm.

2. Procédé selon la revendication 1, dans lequel le film est renforcé au moyen d'une matière non tissée ou d'un filet.
